Europäisches Patentamt

European Patent Office

Office européen des brevets

(19)

(11) Veröffentlichungsnummer: **0 016 370**
**B1**

(12) **EUROPÄISCHE PATENTSCHRIFT**

(45) Veröffentlichungstag der Patentschrift:
**19.10.83**

(51) Int. Cl.³: **F 24 J 3/02**

(21) Anmeldenummer: **80101075.2**

(22) Anmeldetag: **04.03.80**

(54) Wärmetauscher zur Aufnahme von Umgebungswärme.

(30) Priorität: **27.03.79 DE 2911913**

(43) Veröffentlichungstag der Anmeldung:
**01.10.80 Patentblatt 80/20**

(45) Bekanntmachung des Hinweises auf die Patenterteilung:
**19.10.83 Patentblatt 83/42**

(84) Benannte Vertragsstaaten:
**AT CH FR GB IT**

(56) Entgegenhaltungen:
**WO-A-80/00920**
**BE-A-722 289**
**DE-A-2 712 532**
**DE-A-2 725 976**
**FR-A-2 309 819**
**FR-A-2 354 427**
**GB-A-1 079 533**
**US-A-3 034 204**
**US-A-3 666 423**
**US-A-3 757 857**
**US-A-3 931 854**

(73) Patentinhaber: **BROWN, BOVERI & CIE
Aktiengesellschaft Mannheim, Kallstadter Strasse 1,
D-6800 Mannheim Käfertal (DE)**

(72) Erfinder: **Heidtmann, Uwe, Ing. grad., Bunsenstrasse 4,
D-6901 Nussloch (DE)**

(74) Vertreter: **Kempe, Wolfgang, Dr. et al, Postfach 1273,
D-6800 Mannheim 1 (DE)**

Wärmetauscher zur Aufnahme von Umgebungswärme

Die Erfindung betrifft einen Wärmetauscher zur Aufnahme von Umgebungswärme mit Durchflußkanälen für einen Wärmeträger, die in Sammelkanäle münden, wobei die Kanäle zwischen zwei etwa rechteckigen Platten ausgebildet sind, die an zwei gegenüberliegenden Rändern kanallose Randstreifen aufweisen.

Ein bekannter Wärmetauscher dieser Art dient zur Aufnahme von Umgebungswärme, insbesondere in Form von Sonnenwärme und/oder Luftwärme und weist zwei aufeinanderbefestigte, rechteckige dünne Metallplatten auf, zwischen denen die Durchflußkanäle und Sammelkanäle ausgebildet sind (FR-A-2 309 819). Die Kanäle weisen ein etwa rundes bis ovales Profil auf und sind zwischen spiegelbildlichen Ausprägungen der Platten gebildet, wobei zwischen benachbarten Kanälen die Platten direkt aufeinanderliegen und wenigstens stellenweise aneinander befestigt sind. Um einen dichten Abschluß nach außen zu erreichen, weisen die Platten ebene Randstreifen auf, welche den mit Kanälen versehenen Bereich umgeben. In den Randstreifen liegen die beiden Platten direkt aufeinander, weisen keine Kanäle auf und sind miteinander dicht verbunden.

Obwohl die Vielzahl der Ausprägungen, welche die Kanäle bilden, dem Wärmetauscher eine gewisse Steifigkeit vermitteln, ist diese jedoch nicht vollständig ausreichend, insbesondere für Wärmetauscher mit großen Baulängen und/oder großen Baubreiten von z. B. über 2 m.

Des weiteren ist ein Wärmetauscher zur Aufnahme von Umgebungswärme bekanntgeworden, der einen großflächigen, zusammenhängenden Innenraum für den Durchfluß eines Wärmeträgers aufweist (FR-A-2 354 427). Der Innenraum ist von zwei Platten begrenzt und seitlich von Randstreifen umgeben, die mit Abkantungen und Sicken versehen sind. Während die Abkantungen für den dichten Anschluß benachbarter Wärmetauscher vorgesehen sind, sollen die Sicken zusammen mit Einprägungen der Rückwand sowie mit punktförmigen Verbindungen der beiden Platten im Bereich des Innenraumes die Festigkeit des Wärmetauschers erhöhen. Diese Art der Festigkeitserhöhung ist in der Herstellung aufwendig und kaum geeignet für Wärmetauscher, bei denen der Wärmeträger hauptsächlich in Durchflußkanälen geführt wird.

Aufgabe der Erfindung ist es daher, einen Wärmetauscher der eingangs genannten Art anzugeben, der eine ausreichende Steifigkeit aufweist, in der Herstellung billig und den üblichen Betriebsanforderungen voll gewachsen ist.

Die Lösung dieser Aufgabe besteht erfindungsgemäß nun darin, daß die Randstreifen in an sich bekannter Weise mit Abkantungen versehen sind und daß wenigstens jener Bereich der Platten, welcher die Durchflußkanäle enthält, mit gemeinsamen, quer zu den Abkantungen verlaufenden Ausbuchtungen beider Platten samt eingeschlossener Durchflußkanäle versehen ist. Es ist also jener Bereich der Platten, welcher die Durchflußkanäle enthält, insbesamt ausgebuchtet, was durch Pressen oder Prägen auf einfache und billige Weise geschehen kann, so daß im Zusammenhang mit den an sich bekannten Abkantungen der Randstreifen eine ausreichende Festigkeit des Wärmetauschers selbst bei großen Baulängen und/oder großen Baubreiten erzielt wird. Darüber hinaus vermitteln die Ausbuchtungen dem Wärmetauscher ein gefälliges Aussehen, das durch geeignete Wahl der Ausbuchtungen an das Profil benachbarter Dacheindeckungen angepaßt werden kann.

Um gute Quersteifigkeit, guten Ablauf von Regen- und/oder Schmelzwasser zu gewährleisten und um ein besonders gefälliges Aussehen zu erzielen, ist es vorteilhaft, daß die Ausbuchtungen jeweils das Profil eines Sägezahns aufweisen, dessen Schneidkante vorzugsweise etwa senkrecht zur Ebene der Randstreifen verläuft, wobei die Schneidkanten jeweils am gleichen Ende der Sägezähne angeordnet sind.

Hierbei kann, um die Quersteifigkei weiter zu erhöhen, und das Aussehen weiter zu verbessern, jede Ausbuchtung im Bereich der Schneidkante eine quer zu den Randstreifen verlaufende Wellung aufweisen.

Ebenfalls hohe Quersteifigkeit wird erreicht, falls die Ausbuchtungen ein in Längsrichtung der Randstreifen verlaufendes Wellenprofil aufweisen.

Eine andere bevorzugte Weiterbildung der Erfindung kann nun darin bestehen, daß die Abkantungen mit den Randstreifen einen spitzen Winkel einschließen und insbesondere auf der Vorderseite des Wärmetauschers angeordnet sind.

Sind mehrere Wärmetauscher zu einer Wärmetauschergruppe hoher Festigkeit nebeneinander angeordnet, so sind vorteilhaft die Abkantungen benachbarter Wärmetauscher durch eine Klammerleiste verbunden, deren gegenüberstehende Schenkel eine auf den Abkantwinkel der Abkantungen abgestimmte Neigung aufweisen und die Abkantungen benachbarter Wärmetauscher umgreifen.

Um hierbei eine steife Querverbindung zwischen den einzelnen Wärmetauschern sicherzustellen, ist es empfehlnswert, daß wenigstens ein keilförmiges Zwischenstück vorgesehen ist, dessen Keilflanken dem Abkantwinkel der Abkantungen angepaßt sind und das zur Fixierung der zu verbindenden Wärmetauscher in den zwischen den Abkantungen benachbarter Wärmetauscher gebildeten Keilspalt gepreßt ist.

Weitere Vorteile der Erfindung gehen aus der folgenden Beschreibung von Ausführungsbeispielen im Zusammenhang mit den schematischen Zeichnungen hervor.

Hierbei zeigt

Fig. 1 die perspektivische Ansicht eines Wärmetauschers gemäß der Erfindung mit Ausbuchtungen in Form von Sägezähnen,

Fig. 2 den Bereich II der Fig. 1 als Ausschnitt in größerem Maßstab und in perspektivischer Ansicht,

Fig. 3 eine Verbindungsmöglichkeit benachbarter Wärmetauscher, als Einzelheit in größerem Maßstabe in Ansicht aus Richtung III der Fig. 1,

Fig. 4 eine Ausführungsvariante des Gegenstands der Fig. 1 und

Fig. 5 einen Wärmetauscher mit Ausbuchtungen in Form von Wellungen, die in Richtung der Randstreifen verlaufen.

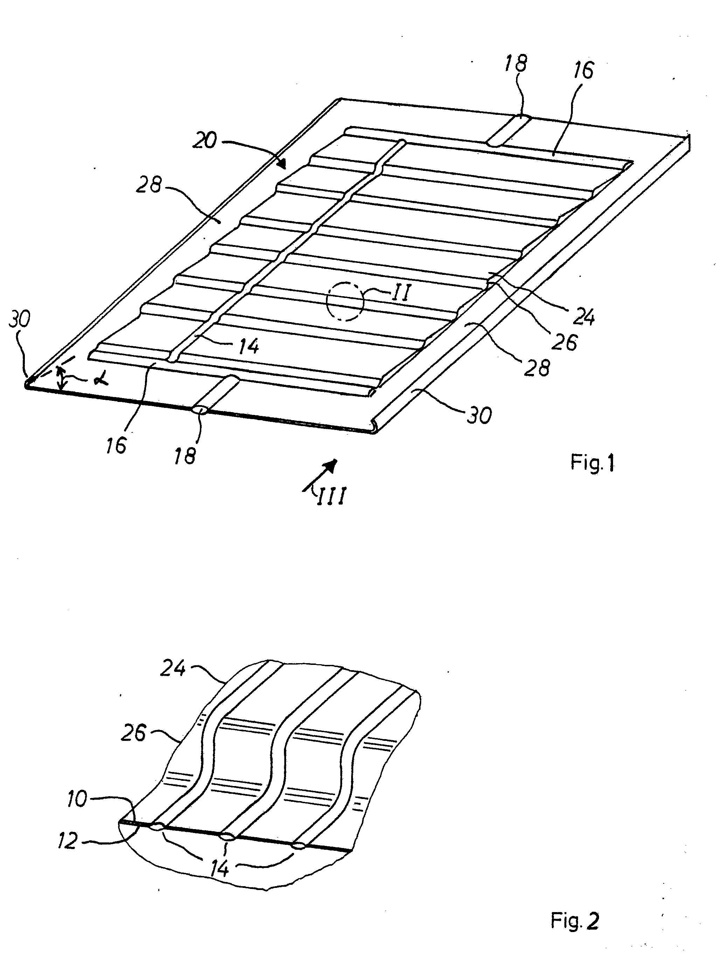

Der Wärmetauscher gemäß Fig. 1 weist einen rechteckigen Umriß auf und ist, wie insbesondere dem Ausschnitt gemäß Fig. 2 zu entnehmen ist, aus zwei aufeinanderliegenden Platten 10, 12 zusammengesetzt, die in Fig. 1 der Übersichtlichkeit wegen nicht dargestellt sind. Die Platten 10, 12 weisen spiegelbildliche Ausprägungen auf, so daß zwischen ihnen Durchflußkanäle 14, Sammelkanäle 16 mit Anschlußstutzen 18 gebildet sind. Der Querschnitt der Kanäle ist rund bis elliptisch, die Dicke der Platten etwa 0,8 bis 2 mm, das Material vorzugsweise Aluminium. Die Durchflußkanäle 14 verlaufen etwa parallel zur langen Rechteckseite und münden an ihren Enden in querverlaufende Sammelkanäle 16. Zur übersichtlicheren Darstellung ist in den Fig. 1, 4 und 5 lediglich ein einziger Durchflußkanal 14 dargestellt, obwohl eine Vielzahl solcher mit im Verhältnis zur Größe des Wärmetauschers sehr geringem gegenseitigen Abstand verlaufende Durchflußkanäle 14 vorhanden ist, wie dies insbesondere aus der Detaildarstellung gemäß Fig. 2 zu entnehmen ist.

Der mit Durchflußkanälen 14 versehene Bereich 20 des Wärmetauschers weist Ausbuchtungen 24 auf, die quer zu dem Randstreifen 28 und den Durchflußkanälen 14 verlaufen und in Reihen nebeneinander angeordnet und gleichmäßig auf den Bereich 20 verteilt sind. Die Ausbuchtungen 24 der Platten 10, 12 weisen die Form von Sägezähnen auf, deren Schneidkanten 26 etwa senkrecht auf der Ebene des Wärmetauschers stehen. Die Ausbildung der Ausbuchtungen ist insbesondere aus Fig. 2 deutlich zu erkennen, welche die Einzelheit II der Fig. 1 in größerem Maßstab in perspektivischer Ansicht darstellt. Hieraus ist zu ersehen, daß im Bereich 20 die beiden Platten 10, 12 und die von ihnen eingeschlossenen Durchflußkanäle 14 gemeinsam der Ausbuchtung unterworfen bzw. sägezahnförmig ausgebildet sind.

Seitlich des Bereichs 20, in welchem die Durchflußkanäle angeordnet sind, verläuft jeweils ein ebener Randstreifen 28 über die gesamte Länge des Wärmetauschers, wobei die Platten 10, 12 im Bereich des Randstreifens unmittelbar aufeinander liegen und fluiddicht aneinander befestigt sind. Das freie Ende der Randstreifen 28 weist jeweils eine Abkantung 30 auf, die sich über die gesamte Länge des Randstreifens erstreckt. Die Abkantungen 30 zeigen hierbei in die gleiche Richtung wie die Ausbuchtungen 24, d. h. zur Vorderseite des Wärmetauschers und schließen mit dem Randstreifen 28 jeweils einen spitzen Winkel $\alpha$ ein von z. B. 45 bis 60°.

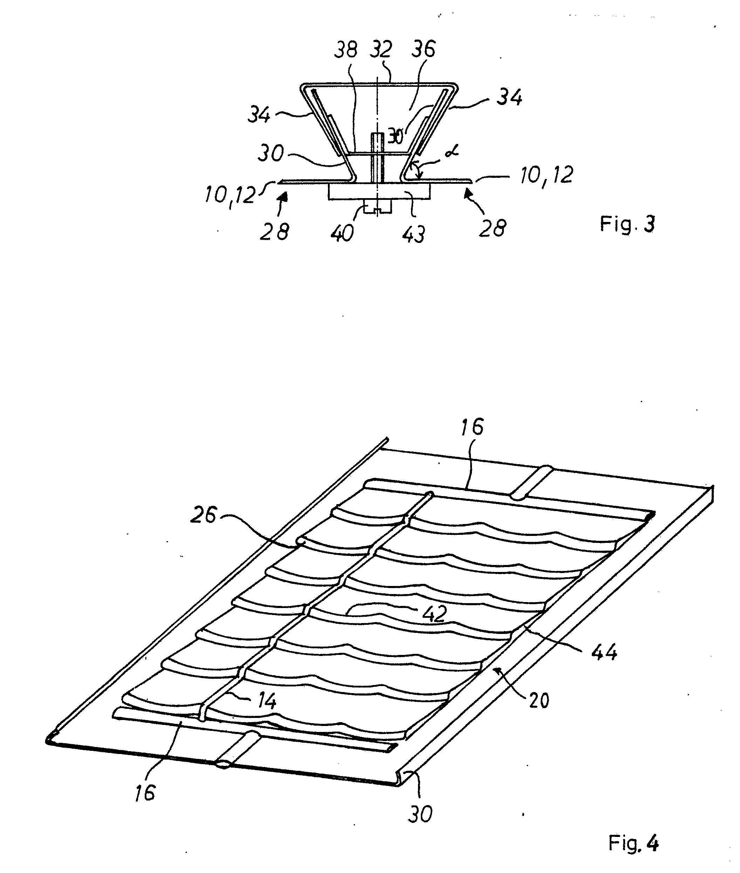

Die Ausbildung der Abkantungen 30 ist insbesondere aus Fig. 3 sehr deutlich zu erkennen, welche die Verbindung von zwei nebeneinanderliegenden Wärmetauschern als Einzelheit in größerem Maßstabe in Ansicht aus Richtung III der Fig. 1 zeigt. Danach werden die Wärmetauscher derart nebeneinander angeordnet, daß die Abkantungen 30 mit geringem gegenseitigen Abstand verlaufen und über das Ende der Abkantungen eine Klammerleiste 32 aufgebracht, deren Schenkel 34 auf die Neigung der Abkantungen 30 abgestimmt sind und diese umgreifen. Die Klammerleiste 32 erstreckt sich hierbei über die gesamte Länge der Abkantungen 30, so daß ein Eindringen von Wasser in den zwischen den Abkantungen 30 verbleibenden Keilspalt 36 verhindert ist.

Um die Abkantungen 30 benachbarter Wärmetauscher gegeneinander zu fixieren, ist im Keilspalt 36 ein keilförmiges Zwischenstück 38 angeordnet, dessen Keilflanken dem Abkantwinkel der Abkantungen 30 angepaßt sind und auf diesem liegen. Das Zwischenstück 38 wird hierbei durch eine Schraube 40 in den Keilspalt 36 gezogen, so daß die Abkantungen 30 an den Schenkeln 34 zur Anlage kommen und somit eine Verbindung der Abkantungen 30 erreicht wird. Die Schraube 40 stützt sich hierbei an einer Lasche 43 ab, welche den Keilspalt 36 überbrückt und an den Unterseiten der Randstreifen 28 anliegt. Das Zwischenstück 38 sowie die Lasche 43 brauchen sich hierbei nicht über die gesamte Länge der Abkantungen 30 erstrecken, es genügt, wenn einzelne kurze Stücke dieser Teile über die Länge der Abkantungen verteilt angeordnet sind.

Durch die Ausbildung des Wärmetauschers mit Ausbuchtungen und seitlichen Abkantungen wird seine Steifigkeit erheblich vergrößert, so daß dieser auch bei der Herstellung aus sehr dünnen Platten mit einer Dicke von z. B. 0,8 bis 2 mm, in großen Längen, z. B. bis zu 5 m und großen Breiten, z. B. bis 2 m, hergestellt werden kann und trotzdem ausreichende Steifigkeit aufweist. Es wird somit die erfindungswesentliche allgemeine Lehre befolgt, durch die Ausbuchtungen die Quersteifigkeit und durch die Abkantungen die Längssteifigkeit zu verbessern.

In Fig. 4 ist eine Ausführungsvariante des Wärmetauschers gemäß Fig. 1 dargestellt. Während beim Gegenstand der Fig. 1 die schneidezahnförmigen Ausbuchtungen 24 im Bereich der Schneidkanten 26 geradlinig und quer zu den Randstreifen 28 bzw. Durchflußkanälen 14 verlaufen, sind in vorliegender Ausführungsvariante die Schneidkanten mit einer quer zu den Randstreifen 28 verlaufenden Wellung 42 versehen, so daß die Ausbuchtungen 44 ein schuppenförmiges Aussehen erhalten. Die Wellung 42 besteht hierbei vorzugsweise aus in gleiche Richtung gekrümmten Bögen, die an ihren Enden aneinander angeschlossen sind. Durch die zusätzliche Anordnung der Wellungen wird die Steifigkeit des Wärmetauschers nochmals erhöht.

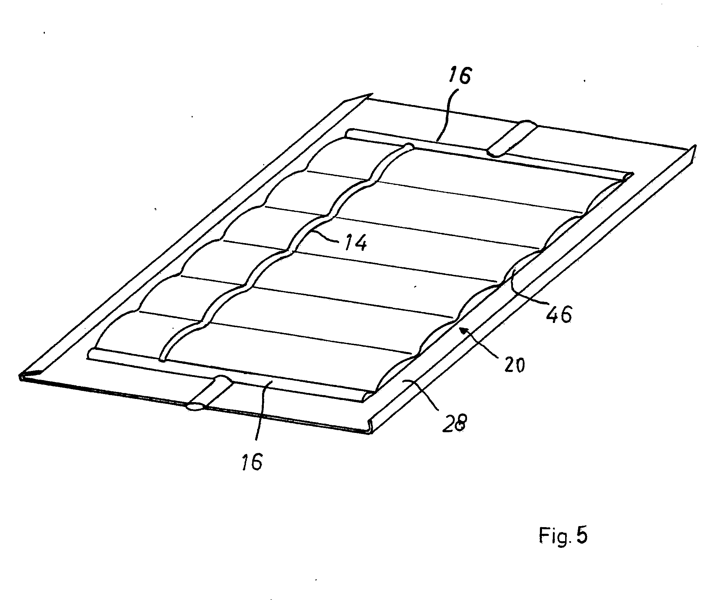

Im Ausführungsbeispiel gemäß Fig. 5 weisen die Ausbuchtungen 46 ein Wellenprofil auf, das sich in Richtung der Randstreifen 28 erstreckt. Auch mit dieser Ausbildung der Ausbuchtungen wird eine große Steifigkeit des Wärmetauschers erreicht.

Anstelle Wärme aufzunehmen, kann mit den Wärmetauschern gemäß vorliegender Erfindung auch Wärme an die Umgebung abgegeben werden, bevorzugtes Einsatzgebiet wird jedoch die Wärmeaufnahme sein.

Die quer zu den Abkantungen verlaufenden Ausbuchtungen schließen mit diesen einen Winkel von etwa 90° ein.

## Patentansprüche

1. Wärmetauscher zur Aufnahme von Umgebungswärme mit Durchflußkanälen (14) für einen Wärmeträger, die in Sammelkanäle (16) münden, wobei die Kanäle (14, 16) zwischen zwei etwa rechteckigen Platten ausgebildet sind, die an zwei gegenüberliegenden Rändern kanallose Randstreifen (28) aufweisen, dadurch gekennzeichnet, daß die Randstreifen (28) in an sich bekannter Weise mit Abkantungen (30) versehen sind und daß wenigstens jener Bereich (20) der Platten (10, 12), welcher die Durchflußkanäle enthält, mit gemeinsamen, quer zu den Abkantungen (30) verlaufenden Ausbuchtungen (24, 44, 46) beider Platten (10, 12) samt eingeschlossener Durchflußkanäle (14) versehen ist.

2. Wärmetauscher nach Anspruch 1, dadurch gekennzeichnet, daß die Ausbuchtungen (24) jeweils das Profil eines Sägezahns aufweisen, dessen Schneidkante (26) vorzugsweise etwa senkrecht zur Ebene der Randstreifen (28) verläuft, wobei die Schneidkanten (26) jeweils am gleichen Ende der Sägezähne angeordnet sind.

3. Wärmetauscher nach Anspruch 2, dadurch gekennzeichnet, daß jede Ausbuchtung (44) im Bereich der Schneidkante (26) eine quer zu den Randstreifen (28) verlaufende Wellung (44) aufweist.

4. Wärmetauscher nach Anspruch 1, dadurch gekennzeichnet, daß die Ausbuchtungen (46) ein in Längsrichtung der Randstreifen (28) verlaufendes Wellenprofil aufweisen.

5. Wärmetauscher nach einem der Ansprüche 1 bis 4, dadurch gekennzeichnet, daß die Abkantungen (30) mit den Randstreifen (28) einen spitzen Winkel α einschließen und insbesondere auf der Vorderseite des Wärmetauschers angeordnet sind.

6. Wärmetauscher nach Anspruch 5, dadurch gekennzeichnet, daß bei einer Wärmetauscher-gruppe hoher Festigkeit mit nebeneinander angeordneten Wärmetauschern die Abkantungen (30) benachbarter Wärmetauscher durch eine Klammerleiste (32) verbunden sind, deren gegenüberstehende Schenkel (34) eine auf den Abkantwinkel der Abkantungen (30) abgestimmte Neigung aufweisen und die Abkantungen (30) benachbarter Wärmetauscher umgreifen.

7. Wärmetauscher nach Anspruch 6, gekennzeichnet durch wenigstens ein keilförmiges Zwischenstück (38), dessen Keilflanken dem Abkantwinkel der Abkantungen (30) angepaßt sind und das zur Fixierung der zu verbindenden Wärmetauscher in den zwischen den Abkantungen (30) benachbarter Wärmetauscher gebildeten Keilspalt (36) gepreßt ist.

## Claims

1. Heat exchanger for receiving surrounding heat with through-flow ducts (14) for a heat carrier which lead into collecting ducts (16), the ducts (14, 16) being constructed between two approximately rectangular plates which comprise ductless edge strips (28) on two opposite edges, characterized in that the edge strips (28) are provided with bent portions (30) in a known manner and in that at least that region (20) of the plates (10, 12), which contains the through-flow ducts, is provided with common projections (24, 44, 46) extending transverse to the bent portions (30) of both plates (10, 12) together with enclosed through-flow ducts (14).

2. Heat exchanger as claimed in claim 1, characterized in that the projections (24) in each case have the profile of a saw tooth, the cutting edge (26) of which preferably extends approximately perpendicularly to the plane of the edge strips (28), the cutting edges (26) in each case being arranged at the same end of the cutting teeth.

3. Heat exchanger as claimed in claim 2, characterized in that each projection (44) comprises an undulation (44) extending transverse to the edge strips (28) in the region of the cutting edge (26).

4. Heat exchanger as claimed in claim 1, characterized in that the projections (46) have an undulating profile extending in the longitudinal direction of the edge strips (28).

5. Heat exchanger as claimed in one of claims 1 to 4, characterized in that the bent portions (30) form an acute angle α with the edge strips (28) and are in particular arranged on the front side of the heat exchanger.

6. Heat exchanger as claimed in claim 5, characterized in that, in the case of a heat exchanger assembly with a high degree of strength and heat exchangers disposed adjacent one another, the bent portions (30) of adjacent heat exchangers are connected by a clamping strip (32), the opposite legs (34) of which have an inclination adapted to the bending angle of the bent portions (30) and embrace the bent portions (30) of adjacent heat exchangers.

7. Heat exchanger as claimed in claim 6, characterized by at least one wedge-shaped intermediate portion (38), the wedge flanks of which are adapted to the bending angle of the bent portions (30) and which intermediate portion (38) is pressed into the wedge-shaped gap (36) formed between the bent portions (30) of adjacent heat exchangers in order to fix the heat exchangers to be connected.

**Revendications**

1. Echangeur de chaleur pour capter de la chaleur environnante, avec des canaux d'écoulement (14) pour un agent caloporteur, qui débouchent dans des canaux collecteurs (16), les canaux (14, 16) étant réalisés entre deux plaques sensiblement rectangulaires présentant sur deux bords opposés des bandes marginales (28) exemptes de canaux, caractérisé par le fait que les bandes marginales (28) sont munies de manière connue en soi de pliures (30); et par le fait qu'au moins la zone (20) des plaques (10, 12) qui renferme les canaux d'écoulement est pourvue d'indentations (24, 44, 46) communes, s'étendant perpendiculairement aux pliures (30), des deux plaques (10, 12) incluant des canaux d'écoulement (14).

2. Echangeur de chaleur selon la revendication 1, caractérisé par le fait que les indentations (24) présentent à chaque fois un profil en dent de scie dont le bord tranchant (26) s'étend de préférence à peu près perpendiculairement au plan des bandes margniales (28), les bords tranchants (26) étant disposés à chaque fois à la même extrémité des dents de scie.

3. Echangeur de chaleur selon la revendication 2, caractérisé par le fait que chaque indentation (44) présente dans la région du bord tranchant (26) une ondulation (44) s'étendant perpendiculairement aux bandes marginales (28).

4. Echangeur de chaleur selon la revendication 1, caractérisé par le fait que les indentations (46) présentent un profil ondulé s'étendant dans le sens longitudinal des bandes marginales (28).

5. Echangeur de chaleur selon l'une des revendications 1 à 4, caractérisé par le fait que les pliures (30) inscrivent un angle aigu $\alpha$ avec les bandes marginales (28) et sont notamment disposées à la face antérieure de l'échangeur de chaleur.

6. Echangeur de chaleur selon la revendication 5, caractérisé par le fait que, en présence d'un groupe d'échangeurs de chaleur de grande solidité avec des échangeurs de chaleur juxtaposés, les pliures (30) d'échangeurs de chaleur voisins sont reliées par une baguette de serrage (32) dont les branches opposées (34) présentent une inclinaison correspondant à l'angle de pliage des pliures (30) et emprisonnent les pliures (30) d'échangeurs de chaleur adjacents.

7. Echangeur de chaleur selon la revendication 6, caractérisé par au moins une pièce intermédiaire cunéiforme (38) dont les flancs sont adaptés à l'angle de pliage des pliures (30) et qui est pressée, en vue de la fixation des échangeurs de chaleur devant être reliés, dans l'intervalle cunéiforme (36) formé entre les pliures (30) d'échangeurs de chaleur voisins.

Fig.1

Fig.2

Fig. 3

Fig. 4

Fig. 5